# EUROPEAN PATENT APPLICATION

(11) **EP 4 765 533 A1**
(43) Date of publication of application: **24.06.2026**
(21) Application number: 24222041.6
(22) Date of filing: 20.12.2024
(51) Int. Cl.: H02H 3/02, H02H 3/087, H02H 9/02, H02H 3/033, H02H 3/05, H02H 7/18

(54) **OVERCURRENT PROTECTION ARRANGEMENT FOR HIGH-VOLTAGE ELECTRICAL SYSTEM**

(71) Applicant: Volvo Truck Corporation, 405 08 Göteborg (SE)
(72) Inventor: NETTO, Diego Santos Pereira, SE-436 37 ASKIM (SE); UMEMURA FILHO, Oswaldo Haruo, 69340 FRANCHEVILLE (SE); GARCIA CARDOSO, Mateus Otavio, SE-421 55 GÖTEBORG (SE)
(74) Representative: Kransell & Wennborg KB

(57) **Abstract**

An overcurrent protection arrangement (100) for a high-voltage electrical system (102), the overcurrent protection arrangement comprising: a solid-state relay (104) arranged between a power source (106) and at least one load (108a-c); and a control circuit (112) operatively connected to the solid-state relay, the control circuit being configured to: detect an overcurrent condition (212) in the system; and control the solid-state relay to limit the current to an average current level (204) exceeding a nominal operational current level (206) of the system.

## Description

### TECHNICAL FIELD

The disclosure relates generally to a high-voltage electrical system for a vehicle. In particular aspects, the disclosure relates to an overcurrent protection arrangement for high-voltage electrical system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In high-voltage electrical systems, such as those in electric vehicles, overcurrent protection is essential for ensuring safety and preventing damage to components. Traditional protection devices, such as thermal fuses or pyro fuses, provide reliable fault isolation but are relatively slow to respond to short-circuit events. Solid-state relays (SSRs) have been developed as a faster alternative, capable of rapidly detecting and responding to overcurrent conditions.

Despite their advantages, existing overcurrent protection methods face challenges in coordinating with downstream protective elements, such as fuses, particularly in systems with multiple load branches. This lack of coordination can lead to unnecessary system-wide disconnections, resulting in disruptions to functionality even for minor, isolated faults. Addressing these issues is critical for improving the safety and reliability of high-voltage electrical systems.

### SUMMARY

According to a first aspect of the disclosure, there is provided an overcurrent protection arrangement for a high-voltage electrical system, the overcurrent protection arrangement comprising: a solid-state relay arranged between a power source and at least one load; and a control circuit operatively connected to the solid-state relay, the control circuit being configured to: detect an overcurrent condition in the system; and control the solid-state relay to limit the current to an average current level exceeding a nominal operational current level of the system.

The first aspect of the disclosure may seek to address the problem of unnecessary full disconnection of power in high-voltage electrical systems, such as electric vehicles, when a short circuit or overcurrent condition occurs. Conventional solid-state relays typically disconnect the entire power supply upon detecting a fault, resulting in a complete loss of power to all connected loads, even if only a single load branch is affected. Such a response reduces system availability and causes unnecessary operational disruptions.

A technical benefit of the described overcurrent protection arrangement may include enabling controlled modulation of the fault current through the solid-state relay, allowing the current to be maintained at an average level exceeding the nominal operational current level of the system. By maintaining the current at this controlled level, the arrangement allows downstream fuses to blow and isolate the specific faulted load branch while power to non-faulty load branches is maintained. This approach enhances system availability, prevents unnecessary shutdowns, and supports better coordination between the solid-state relay and downstream protective devices.

Optionally, in some examples, including in at least one preferred example, the control circuit is configured to, when an overcurrent condition is detected, modulate the solid-state relay using pulse-width modulation, PWM, to limit the current to an average current level exceeding a nominal operational current level of the system. A technical benefit may include enabling precise and dynamic control of the fault current during an overcurrent condition. By using pulse-width modulation (PWM), the control circuit periodically opens and closes the solid-state relay at a defined frequency and duty cycle. PWM allows the current to be regulated to an average level that exceeds the nominal operational current level but remains below the peak short-circuit current. The use of PWM further provides accurate control over the current profile, enabling gradual and controlled current reduction instead of a sudden disconnection.

Optionally, in some examples, including in at least one preferred example, the control circuit comprises logic circuitry configured to, when an overcurrent condition is detected, open the solid-state relay when the current exceeds a first overcurrent threshold level and close the solid-state relay when the current falls below a second overcurrent threshold level. A technical benefit may include improved control of the solid-state relay during fault conditions. By configuring the logic circuitry to operate the solid-state relay based on two threshold current levels, the arrangement can reduce oscillations and avoid rapid toggling of the relay, thereby resulting in a more stable system behavior.

Optionally, in some examples, including in at least one preferred example, the control circuit is further configured to maintain the average current level for a predetermined duration. A technical benefit may include ensuring that downstream fuses are given sufficient time to blow. By maintaining the average current level for a set period, the overcurrent protection arrangement allows the system to isolate faults in individual load branches without disconnecting the entire power source, thereby improving system availability.

Optionally, in some examples, including in at least one preferred example, the overcurrent protection arrangement further comprises a plurality of fuses, each fuse being arranged between the solid-state relay and a respective one of a plurality of loads. A technical benefit may include selective fault isolation. By arranging each fuse between the solid-state relay and a respective load, only the faulty branch can be isolated, allowing the remaining load branches to continue operating.

Optionally, in some examples, including in at least one preferred example, the control circuit is further configured to control the average current level to be higher than a breaking current of the at least one fuse. A technical benefit may include ensuring that downstream fuses blow properly under fault conditions. By maintaining the average current level higher than the breaking current of a fuse in a faulty branch, the need for unnecessary intervention from the control system is avoided, and it can also be prevented that a main fuse is blown which would disable the entire system.

Optionally, in some examples, including in at least one preferred example, the control circuit is configured to detect an overcurrent condition by monitoring a current through the solid-state relay. A technical benefit may include providing a simple and efficient method for detecting overcurrent conditions. By monitoring the current directly through the solid-state relay, the control circuit can quickly identify overcurrent events without requiring complex detection mechanisms. This approach enables fast and accurate fault detection, supporting a rapid protective response while maintaining a streamlined system design.

Optionally, in some examples, including in at least one preferred example, the overcurrent protection arrangement further comprises a shunt resistor arranged in series with the solid-state relay, and the control circuit is configured to detect an overcurrent condition by monitoring a voltage drop across a shunt resistor. A technical benefit may include precise detection of overcurrent conditions using an established and cost-effective sensing approach. By measuring the voltage drop across the shunt resistor, the control circuit can accurately determine the magnitude of the current, enabling fast fault detection and response.

Optionally, in some examples, including in at least one preferred example, the overcurrent protection arrangement further comprises a hall sensor arranged to measure a current through the solid-state relay. A technical benefit may include non-intrusive current sensing. The use of a Hall effect sensor enables current measurement without requiring direct electrical contact, which increases the reliability of the measurement process and reduces the risk of measurement interference, particularly in high-voltage environments.

There is also provided a vehicle comprising: a power source; at least one load; and an overcurrent protection system according to any one of the preceding examples arranged between the power source and the at least one load.

According to a second aspect of the disclosure, there is provided a method for overcurrent protection in an overcurrent protection arrangement for a high-voltage electrical system, the overcurrent protection arrangement comprising a solid-state relay arranged between a power source and at least one load, and a control circuit operatively connected to the solid-state relay, the method comprising, by the control circuit: detecting an overcurrent condition in the system; and controlling the solid-state relay to limit the current to an average current level exceeding a nominal operational current level of the system.

Optionally, in some examples, including in at least one preferred example, controlling the solid-state relay comprises maintaining the average current level lower than a predetermined safety current level of the at least one load. A technical benefit may include ensuring the protection of connected loads. By maintaining the current below a predetermined safety current level, the control system reduces the risk of damage to load components and maintains safe operation while allowing a fuse between the solid-state relay and the load to blow.

Optionally, in some examples, including in at least one preferred example, the method further comprises detecting that the overcurrent condition has ended, and closing the solid-state relay. A technical benefit may include automatic restoration of system functionality after a fault is cleared. By detecting the end of the overcurrent condition and automatically closing the relay, the system can resume normal operation without manual intervention, reducing system downtime.

Further effects and features of this second aspect of the present invention are largely analogous to those described above in connection with the first aspect of the invention.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary overcurrent protection arrangement according to an example.
FIG. 2 is a graph illustrating exemplary currents in an overcurrent protection arrangement according to an example.
FIG. 3 illustrates details of an example circuit in an overcurrent protection arrangement according to an example.
FIG. 4 is a flow chart outlining a method of overcurrent protection according to an example.
FIG. 5 is a flow chart outlining a method of overcurrent protection according to an example.
FIG. 6 is a flow chart outlining a method of overcurrent protection according to an example.
FIG. 7 is a vehicle comprising an exemplary overcurrent protection arrangement according to an example.
FIG. 8 is another view of an exemplary overcurrent protection arrangement, according to an example.

### DETAILED DESCRIPTION

The detailed description set forth below provides information and examples of the disclosed technology with sufficient detail to enable those skilled in the art to practice the disclosure.

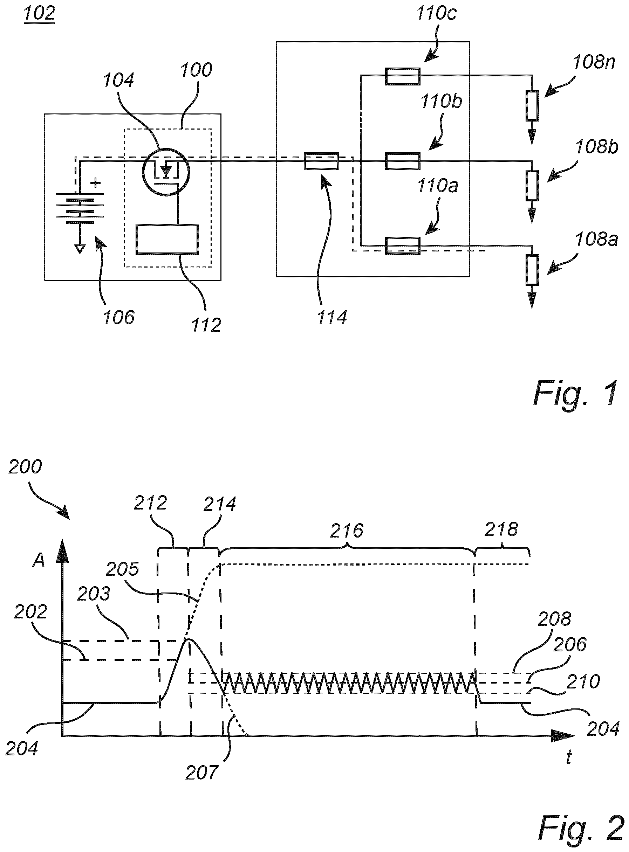

FIG. 1 is an exemplary overcurrent protection arrangement 100 for a high-voltage electrical system 102. The overcurrent protection arrangement 100 will mainly be described with reference to a high-voltage electrical system of a vehicle. However, the described overcurrent protection system may equally well be implemented in other applications, such as in marine vessels and in stationary installations. That the system is a high-voltage system is here taken to mean that the system and components of the system are capable of handling voltages of at least in the range of 400V to 800V or higher.

The overcurrent protection arrangement 100 comprises a solid-state relay 104 arranged between a power source 106 and at least one load 108a-c, where the illustrated example comprises three loads 108 a-c arranged in three parallel branches. The overcurrent protection arrangement 100 further comprises a control circuit 112 operatively connected to the solid-state relay 104, the control circuit 112 being configured to: detect an overcurrent condition 212 in the system; and control the solid-state relay to limit the current to an average current level 206 exceeding a nominal operational current level 204 of the system 102.

The described control circuit 112 can comprise a plurality of separate control circuit elements including both analog and digital circuitry. The control circuit 112 may for example comprise a control unit which may be part of or communicate with a battery management system. The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The functionality of the overcurrent protection arrangement will be described with further reference to Fig. 2 showing graph 200 illustrating current through the solid-state relay as a function of time for different operating conditions and different currents.

An overcurrent condition is in the present context seen as a current level through the solid-state relay 104 exceeding an overcurrent threshold level 202. The control circuit 112 may further be configured to detect an overcurrent first when the current has exceeded the overcurrent threshold value for a certain period of time in order to avoid that the overcurrent condition is triggered by transient current spikes and the like.

Fig 2. Illustrates a nominal operating current level 204 which is the current during normal operating conditions. It can be assumed that the nominal operating current level 204 is known at least within a range of currents. Once a fault such as a short circuit occur in a branch of the electrical system 100, the current begins to increase as illustrated by the time period 212. Once the current reaches the overcurrent threshold level 202 an overcurrent condition is detected and the control circuit begins to control the solid-state relay to limit the current.

In an example, the control circuit 112 is configured to open the solid-state relay 104 when the current exceeds a first overcurrent threshold level 208 and close the solid-state relay 104 when the current falls below a second overcurrent threshold level 210 when an overcurrent condition is detected. During time period 212, the current first reaches an overcurrent peak level 203 which may occur during the time it takes for the solid-state relay 104 to react and open.

As next illustrated in time period 214 in Fig. 2, the current is above the first overcurrent threshold level 208 and the solid-state relay is consequently kept open (i.e. turned off) until the current has dropped down to the second overcurrent threshold level 210 at which point the solid-state relay 104 is closed to start the modulation of the current. The current is modulated so that an average modulated current level 206 is higher than the nominal operational current level 204. The dashed line 205 illustrates a prospective short-circuit current if no current control is provided and, and dashed line 207 illustrates the current if the solid-state relay would be maintained in an open state.

In another example the solid-state relay 104 is modulated using pulse-width modulation, PWM, to limit the current to an average current level exceeding a nominal operational current level of the system 102 when an overcurrent condition is detected. The pulse width can for example be preset based on known properties of the system 100, or the pulse width may be dynamically adjusted to achieve a desired average current level, where dynamic adjustment can be based on the measured current through the solid-state relay.

The average current level 206 is advantageously set to be higher than or equal to a breaking current level of the fuse 1 10a-c located between the solid-state relay 104 and the respective load 108a-c. The breaking current of the fuse 1 10a-c is the current at which the fuse 110a-c is designed to blow. Moreover, the average current level 206 may be maintained for a sufficient duration of time, illustrated by time period 216 of Fig. 2, to allow the fuse 1 10a-c to blow (i.e. break), thereby protecting the load 108a-c from an excessive current. The average current level 206 and the time period during which the average current level 206 is maintained may thereby be predetermined based on properties of the fuse 110a-c.

Fig. 1 further illustrates that the high-voltage electrical system 102 comprises a main fuse 114 having a higher breaking current than the fuses 110a-c arranged in the branches. Thereby, if one of the fuses 1 10a-c of a branch is blown, the other, non-faulty, branches can continue to operate.

Moreover, the average current level 206 at which the current is maintained is preferably set to be lower than a safety threshold current of the loads 108a-c of the system 102. Furthermore, the predetermined duration 216 for which the average current level 206 is maintained is preferably based on safety limits of the power source 106 and the loads 108a-c so that if the predetermined duration 216 is exceeded and the current is not back at a nominal operating level 204, the solid-state relay 104 is held open to protect components of the system.

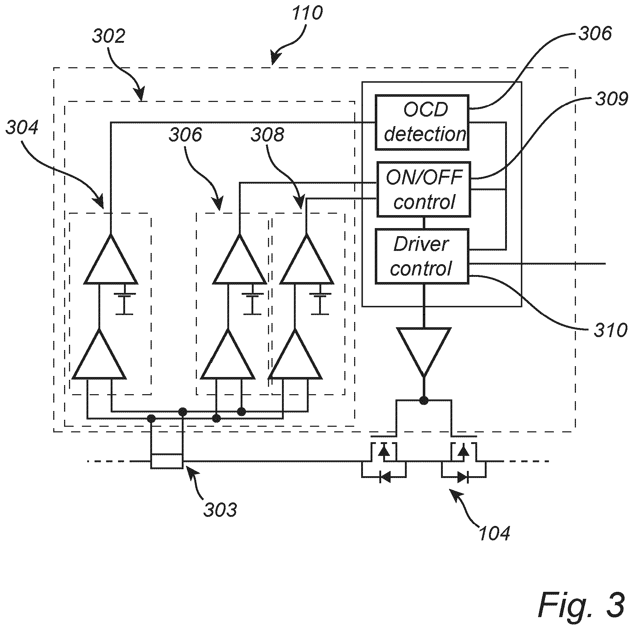

Fig. 3 illustrates an example schematic of logic circuitry 302 achieving control of the solid-state relay 104 to modulate the current as described above. The logic circuitry 302 comprises three parallelly arranged sets of operational amplifiers 304, 306, 308 arranged to measure a current through a shunt resistor 303 and configured to detect when three separate current levels are exceeded. The first set 304 detects the overcurrent threshold level 202 and provides a signal to an overcurrent detection circuit 305. The second and third set 306, 308 detects the first and second overcurrent threshold levels 208, 210, respectively, and provides a signal to an on/off control circuit 309. Each of the overcurrent detection circuit 305 and the on/off control circuit 309 is in turn connected to a driver control circuit 310 which operates the solid-state relay 104 to open or close.

Instead of the shunt resistor 303 illustrated in Fig. 3, it is also possible to use a Hall-sensor comprising a hall-effect sensitive element. The Hall-sensor would be placed close to the power path so that the sensor generates a voltage proportional to the current in the power path. Then remaining circuitry would be the functionally the same as for the circuit with a shunt resistor.

The functionality of the circuitry and operational amplifiers described with reference to Fig. 3 can be assumed to be well known by the skilled person and will not be described in further detail. It should be noted that the described circuitry is provided as an enabling example and that many different circuit combinations can be used to achieve the same functionality.

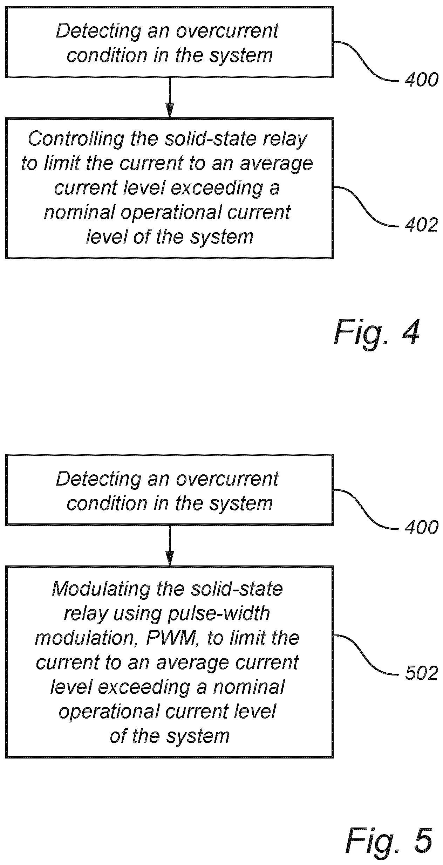

Fig. 4 is a flow chart outlining steps of a method for overcurrent protection in the overcurrent protection arrangement 100. The method comprises, by the control circuit detecting 400 an overcurrent condition 212 in the system 102; and controlling 402 the solid-state relay 104 to limit the current to an average current level 206 exceeding a nominal operational current level 204 of the system 102.

Fig. 5 is a flow chart outlining further steps of a method for overcurrent protection in the overcurrent protection arrangement 100, wherein controlling the solid-state relay 104 comprises modulating 502 the solid-state relay 104 using pulse-width modulation, PWM, to limit the current to an average current level 204 exceeding a nominal operational current level 206 of the system.

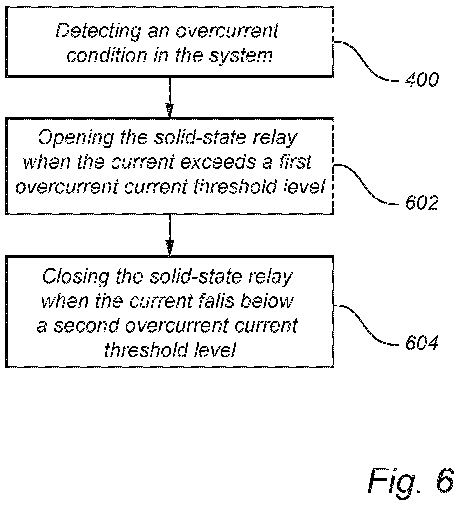

Fig. 6 is a flow chart outlining further steps of a method for overcurrent protection in the overcurrent protection arrangement 100, wherein controlling the solid-state relay 104 comprises opening 602 the solid-state relay 104 when the current exceeds a first overcurrent threshold level 208, and closing 604 the solid-state relay when the current falls below a second overcurrent threshold level 210.

Even though two specific examples of current modulation are provided herein, the skilled person realizes that other methods of current control and/or modulation would also be possible in order to achieve the desired average current level through the solid-state relay during an overcurrent condition.

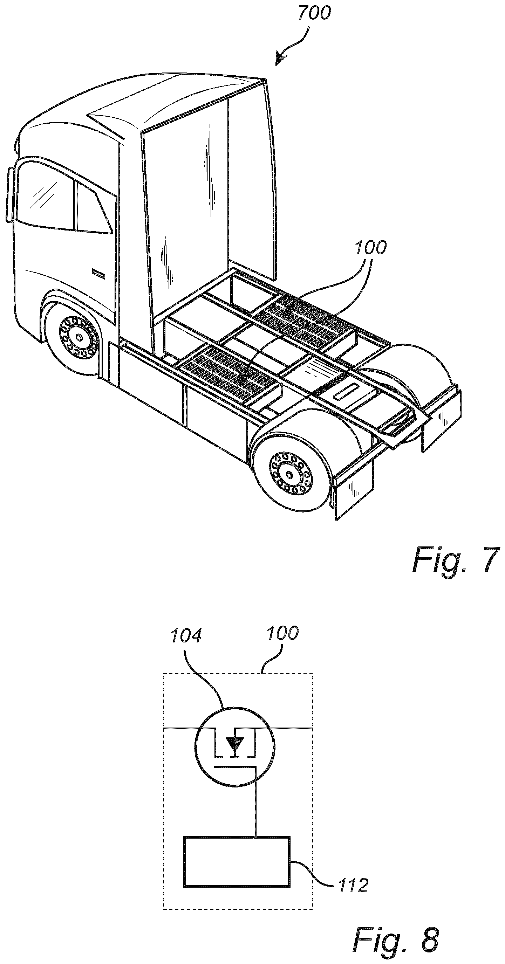

Fig. 7 illustrates an example vehicle comprising an overcurrent protection system 100 according to any one of the preceding examples arranged between a power source and a load of the vehicle.

Fig. 8 is another view of Fig. 1, according to an example. Fig. 8 illustrates an overcurrent protection arrangement 100 for a high-voltage electrical system, the overcurrent protection arrangement comprising: a solid-state relay 104 arranged between a power source 106 and at least one load 108a-c; and a control circuit 112 operatively connected to the solid-state relay, the control circuit being configured to: detect an overcurrent condition 212 in the system; and control the solid-state relay 104 to limit the current to an average current level 204 exceeding a nominal operational current level 206 of the system.

Example 1. An overcurrent protection arrangement (100) for a high-voltage electrical system (102), the overcurrent protection arrangement comprising: a solid-state relay (104) arranged between a power source (106) and at least one load (108a-c); and a control circuit (112) operatively connected to the solid-state relay, the control circuit being configured to: detect an overcurrent condition (212) in the system; and control the solid-state relay to limit the current to an average current level (204) exceeding a nominal operational current level (206) of the system.

Example 2. The overcurrent protection arrangement, where the control circuit is configured to, when an overcurrent condition is detected, modulate the solid-state relay using pulse-width modulation, PWM, to limit the current to an average current level exceeding a nominal operational current level of the system.

Example 3. The overcurrent protection arrangement according to example 1, wherein the control circuit (112) comprises logic circuitry (302) configured to, when an overcurrent condition is detected, open the solid-state relay when the current exceeds a first overcurrent threshold level (208) and close the solid-state relay when the current falls below a second overcurrent threshold level (210).

Example 4. The overcurrent protection arrangement according to any one of the preceding examples, wherein the control circuit is further configured to maintain the average current level for a predetermined duration (216).

Example 5. The overcurrent protection arrangement according to any one of the preceding examples, further comprising a plurality of fuses (110a-c), each fuse being arranged between the solid-state relay (104) and a respective one of a plurality of loads (108a-c).

Example 6. The overcurrent protection arrangement according to any one of the preceding examples, wherein the control circuit is further configured to control the average current level to be higher than a breaking current of the at least one fuse (1 10a-c).

Example 7. The overcurrent protection arrangement according to any one of the preceding examples, wherein the control circuit is configured to detect an overcurrent condition by monitoring a current through the solid-state relay.

Example 8. The overcurrent protection arrangement according to any one of the preceding examples, further comprising a shunt resistor arranged in series with the solid-state relay, and wherein the control circuit is configured to detect an overcurrent condition by monitoring a voltage drop across a shunt resistor.

Example 9. The overcurrent protection arrangement according to any one of examples 1 to 7, further comprising a hall sensor arranged to measure a current through the solid-state relay.

Example 10. A vehicle comprising: a power source (106); at least one load (108 a-c); and an overcurrent protection system (100) according to any one of the preceding examples arranged between the power source and the at least one load.

Example 11. A method for overcurrent protection in an overcurrent protection arrangement (100) for a high-voltage electrical system, the overcurrent protection arrangement comprising a solid-state relay (104) arranged between a power source (106) and at least one load (108a-c), and a control circuit (110) operatively connected to the solid-state relay, the method comprising, by the control circuit: detecting (400) an overcurrent condition (212) in the system; and controlling (402) the solid-state relay to limit the current to an average current level (206) exceeding a nominal operational current level (204) of the system.

Example 12. The method according to example 11, wherein controlling the solid-state relay comprises modulating (502) the solid-state relay using pulse-width modulation, PWM, to limit the current to an average current level (206) exceeding a nominal operational current level (204) of the system.

Example 13. The method according to example 11, wherein controlling the solid-state relay comprises: opening (602) the solid-state relay when the current exceeds a first overcurrent threshold level (208); and closing (604) the solid-state relay when the current falls below a second overcurrent threshold level (210).

Example 14. The method according to any one of examples 11 to 13, wherein detecting an overcurrent condition comprises detecting a current through the solid-state relay exceeding an overcurrent threshold level (202).

Example 15. The method according to any one of examples 11 to 14, further comprising maintaining the average current level (204) exceeding the nominal operational current level (206) for a predetermined duration (216).

Example 16. The method according to example 15, wherein the predetermined duration (216) is configured to exceed a time required for the at least one fuse (1 10a-c) to blow at the average current level (204).

Example 17. The method according to any one of examples 11 to 16, further comprising controlling the average current level to be higher than a breaking current of the at least one fuse (1 10a-c).

Example 18. The method according to any one of examples 11 to 17, wherein detecting an overcurrent condition comprises monitoring a voltage drop across a shunt resistor arranged in series with the solid-state relay.

Example 19. The method according to any one of examples 11 to 18, wherein controlling (402) the solid-state relay comprises maintaining the average current level (204) lower than a predetermined safety current level of the at least one load.

Example 20. The method according to any one of examples 11 to 19, further comprising detecting that the overcurrent condition has ended, and closing the solid-state relay.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An overcurrent protection arrangement (100) for a high-voltage electrical system (102), the overcurrent protection arrangement comprising:
a solid-state relay (104) arranged between a power source (106) and at least one load (108a-c); and
a control circuit (112) operatively connected to the solid-state relay, the control circuit being configured to:
detect an overcurrent condition (212) in the system; and
control the solid-state relay to limit the current to an average current level (204) exceeding a nominal operational current level (206) of the system.

2. The overcurrent protection arrangement, where the control circuit is configured to, when an overcurrent condition is detected, modulate the solid-state relay using pulse-width modulation, PWM, to limit the current to an average current level exceeding a nominal operational current level of the system.

3. The overcurrent protection arrangement according to claim 1, wherein the control circuit (112) comprises logic circuitry (302) configured to, when an overcurrent condition is detected, open the solid-state relay when the current exceeds a first overcurrent threshold level (208) and close the solid-state relay when the current falls below a second overcurrent threshold level (210).

4. The overcurrent protection arrangement according to any one of the preceding claims, wherein the control circuit is further configured to maintain the average current level for a predetermined duration (216).

5. The overcurrent protection arrangement according to any one of the preceding claims, further comprising a plurality of fuses (1 10a-c), each fuse being arranged between the solid-state relay (104) and a respective one of a plurality of loads (108a-c).

6. The overcurrent protection arrangement according to any one of the preceding claims, wherein the control circuit is further configured to control the average current level to be higher than a breaking current of the at least one fuse (1 10a-c).

7. The overcurrent protection arrangement according to any one of the preceding claims, wherein the control circuit is configured to detect an overcurrent condition by monitoring a current through the solid-state relay.

8. The overcurrent protection arrangement according to any one of the preceding claims, further comprising a shunt resistor arranged in series with the solid-state relay, and wherein the control circuit is configured to detect an overcurrent condition by monitoring a voltage drop across a shunt resistor.

9. The overcurrent protection arrangement according to any one of claims 1 to 7, further comprising a hall sensor arranged to measure a current through the solid-state relay.

10. A vehicle comprising:
a power source (106);
at least one load (108 a-c); and
an overcurrent protection system (100) according to any one of the preceding claims arranged between the power source and the at least one load.

11. A method for overcurrent protection in an overcurrent protection arrangement (100) for a high-voltage electrical system, the overcurrent protection arrangement comprising a solid-state relay (104) arranged between a power source (106) and at least one load (108a-c), and a control circuit (110) operatively connected to the solid-state relay, the method comprising, by the control circuit:
detecting (400) an overcurrent condition (212) in the system; and
controlling (402) the solid-state relay to limit the current to an average current level (206) exceeding a nominal operational current level (204) of the system.

12. The method according to claim 11, wherein controlling the solid-state relay comprises modulating (502) the solid-state relay using pulse-width modulation, PWM, to limit the current to an average current level (206) exceeding a nominal operational current level (204) of the system.

13. The method according to claim 11, wherein controlling the solid-state relay comprises:
opening (602) the solid-state relay when the current exceeds a first overcurrent threshold level (208); and
closing (604) the solid-state relay when the current falls below a second overcurrent threshold level (210).

14. The method according to any one of claims 11 to 13, wherein controlling (402) the solid-state relay comprises maintaining the average current level (204) lower than a predetermined safety current level of the at least one load.

15. The method according to any one of claims 11 to 14, further comprising detecting that the overcurrent condition has ended, and closing the solid-state relay.
